# EUROPEAN PATENT APPLICATION

(11) **EP 4 221 141 A1**
(43) Date of publication of application: **02.08.2023**
(21) Application number: 21884904.0
(22) Date of filing: 09.10.2021
(51) Int. Cl.: H04L 47/00

(54) **NETWORK CONGESTION CONTROL METHOD AND APPARATUS**

(30) Priority: 29.10.2020 CN 202011184710
(71) Applicant: Huawei Technologies Co., Ltd., Shenzhen, Guangdong 518129 (CN)
(72) Inventor: SUN, Wenhao, Shenzhen, Guangdong 518129 (CN); YAN, Long, Shenzhen, Guangdong 518129 (CN); ZHUANG, Yan, Shenzhen, Guangdong 518129 (CN); XU, Yonghui, Shenzhen, Guangdong 518129 (CN); ZHENG, Hewen, Shenzhen, Guangdong 518129 (CN); QU, Xiangfeng, Shenzhen, Guangdong 518129 (CN); SUN, Liyang, Shenzhen, Guangdong 518129 (CN)
(74) Representative: Pfenning, Meinig & Partner mbB
(86) International application number: PCT/CN2021/122816
(87) International publication number: WO 2022/089175

(57) **Abstract**

This application discloses a network congestion control method and apparatus. A network congestion control solution is a congestion control solution based on hardware matching. When an intelligent network interface card obtains to-be-transmitted traffic, the intelligent network interface card may identify an algorithm matching feature of the traffic, and match a congestion control algorithm based on the algorithm matching feature of the traffic. Different algorithm matching features may match different congestion control algorithms. Therefore, a hardware-based network congestion control algorithm may be flexibly used.

## Description

This application claims priority to Chinese Patent Application No. 202011184710.6, filed with the China National Intellectual Property on October 29, 2020 and entitled "NETWORK CONGESTION CONTROL METHOD AND APPARATUS", which is incorporated herein by reference in its entirety.

### TECHNICAL FIELD

This application relates to the field of communication technologies, and in particular, to a network congestion control method and apparatus.

### BACKGROUND

Resources in a computer network are limited. Network congestion occurs when network performance deteriorates because a resource requirement in the network exceeds available resources in the network for a period of time. Network congestion needs to be controlled, to prevent excessive data from being injected into the network.

Congestion is especially likely to occur in a large-scale data exchange scenario, for example, in a data center. In a current data center, many applications use a transmission control protocol (transmission control protocol, TCP) as a transmission protocol to transmit and exchange data in the network. A core of the TCP is congestion control. Therefore, congestion control has decisive impact on performance of the TCP. A congestion control algorithm of the TCP is iteratively updated, but the TCP uses a kernel-based congestion control (congestion control, CC) algorithm.

However, as the network develops, requirements for a network bandwidth, a delay, and stability are higher than those of the past Internet in one or two orders of magnitude. In the data center, the conventional kernel-based congestion control algorithm can hardly meet such high requirements.

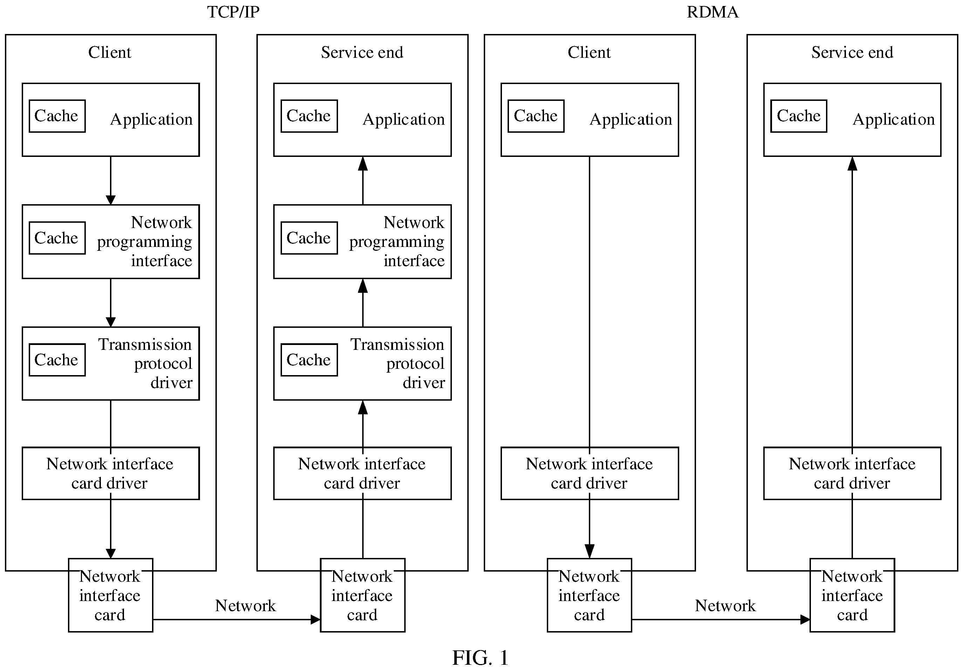

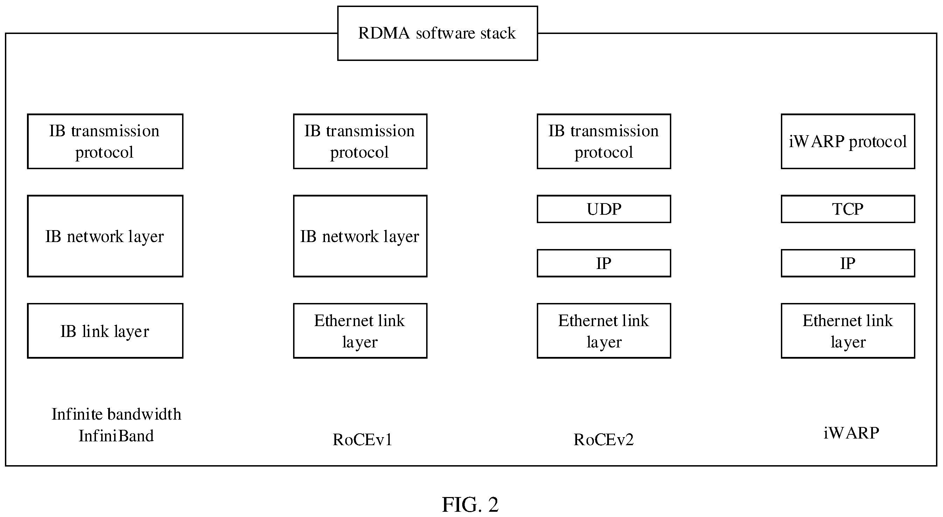

As a remote direct memory access (remote direct memory access, RDMA) lossless network emerges, as shown in FIG. 1, RDMA is used to offload a transmission protocol onto an intelligent network interface card, and a kernel bypass (kernel bypass) zero-copy technology is used to minimize system overheads. This greatly reduces a network delay, and releases a large quantity of central processing unit (central processing unit, CPU) resources to enable CPU load to be almost zero. Compared with a software-based transmission control protocol/internet protocol (transmission control protocol/internet protocol, TCP/IP) network protocol stack, the RDMA provides an ultra-low delay and generates nearly zero CPU overhead. Therefore, the RDMA is widely deployed in a data center network. To be compatible with the Ethernet that is widely used in the data center, the RDMA needs to be carried over a conventional IP-based Ethernet network. Therefore, as shown in FIG. 2, in the data center, an RDMA transport layer data packet is encapsulated in a user datagram protocol (user datagram protocol, UDP)/internet protocol (internet protocol, IP) data packet and transmitted over the Ethernet, which is an RoCEv2. For both the RDMA and the RoCEv2, an important core is a congestion control algorithm. However, a conventional congestion control solution based on a sliding window implemented in the kernel is difficult to be used in the RDMA lossless network, and a congestion control solution based on the intelligent network interface card emerges.

In the TCP, the CC algorithm is implemented through software. This allows researchers and developers to quickly design and verify new CC algorithms. Therefore, many CC algorithms are available in the TCP. However, most commercial RoCEv2 network interface cards still have only built-in data center quantified congestion notifications (data center quantized congestion notification, DCQCN) (or variants thereof) as unique remote direct memory access over converged Ethernet (RDMA over converged Ethernet, RoCE) congestion control mechanisms. Therefore, another algorithm cannot be switched to avoid a performance defect of the DCQCN when necessary.

Compared with a RoCE network interface card that has only one built-in CC algorithm, the TCP has a plurality of CC algorithms in TCPthat may be switched to each other or used together. For example, in a Linux operating system, a default CC algorithm may be globally switched. A setsockopt function may be used to configure different CC algorithms for different TCP connections based on user-defined conditions. Because different applications have different performance requirements, performance obtained according to the different CC algorithms is likely to exceed that obtained only according to any CC algorithm.

However, because the CC algorithm in the TCP is usually implemented through software, efficiency is limited, and overall performance is low. Therefore, although the CC algorithm in the TCP is flexible enough, the CC algorithm in the TCP cannot be directly applied to a network that depends on a hardware CC algorithm, such as the RoCE.

In view of this, flexibility of using a hardware-based network congestion control algorithm needs to be improved.

### SUMMARY

This application provides a network congestion control method and apparatus, to improve flexibility of using a hardware-based network congestion control algorithm.

According to a first aspect, a network congestion control method is provided, applied to a network congestion control apparatus. The network congestion control apparatus includes an intelligent network interface card. The method includes: The intelligent network interface card obtains at least two types of to-be-transmitted traffic; the intelligent network interface card identifies algorithm matching features of the at least two types of traffic; when the intelligent network interface card determines to perform congestion control on any one type of traffic in the at least two types of traffic, the intelligent network interface card determines a congestion control algorithm that matches an algorithm matching feature of the any one type of traffic; and the intelligent network interface card performs congestion control on the any one type of traffic according to the congestion control algorithm that matches the algorithm matching feature of the any one type of traffic. In the method, the network congestion control solution is a congestion control solution based on hardware matching. When the intelligent network interface card obtains the to-be-transmitted traffic, the intelligent network interface card may identify the algorithm matching feature of the traffic, and match congestion control algorithm based on the algorithm matching feature of the traffic. Different algorithm matching features may match different congestion control algorithms. Therefore, a hardware-based network congestion control algorithm may be flexibly used.

In a possible implementation, that the intelligent network interface card identifies algorithm matching features of the at least two types of traffic includes at least one of the following operations: The intelligent network interface card identifies the algorithm matching feature of the traffic based on a field used to identify a feature of the traffic, where the field includes at least one of the following: a traffic class, quality of service, a type of service, and a differentiated services code point DSCP; or the intelligent network interface card identifies the algorithm matching feature of the traffic based on a feature of the traffic, where the feature of the traffic includes at least one of the following: a data amount in the traffic, start time of the traffic, deadline time of the traffic, address information of a peer end of the traffic, and a customized traffic feature. In this implementation, when an application invokes the intelligent network interface card to send/receive data, the application may modify a specific field to identify the feature of the traffic, so that the intelligent network interface card may identify the algorithm matching feature of the traffic based on the field used to identify the feature of the traffic. Alternatively, the intelligent network interface card may identify the traffic algorithm matching feature based on the feature of the traffic.

In still another possible implementation, the network congestion control apparatus further includes a configuration tool. The method further includes: The configuration tool sends configuration information to the intelligent network interface card, where the configuration information includes a matching relationship between the algorithm matching features of the at least two types of traffic and at least two congestion control algorithms; and the intelligent network interface card storing the matching relationship between the algorithm matching features of the at least two types of traffic and the at least two congestion control algorithms. In this implementation, the intelligent network interface card may preconfigure the matching relationship between the algorithm matching features of the at least two types of traffic and the at least two congestion control algorithms, and store the matching relationship into a configuration register. In this way, after the intelligent network interface card identifies the algorithm matching feature of the traffic, the intelligent network interface card may match a corresponding congestion control algorithm based on the identified algorithm matching feature.

In still another possible implementation, when the intelligent network interface card determines to perform congestion control on any one type of traffic in the at least two types of traffic, that the intelligent network interface card determines a congestion control algorithm that matches an algorithm matching feature of the any one type of traffic includes: The intelligent network interface card determines to perform congestion control on the at least two types of traffic; and the intelligent network interface card, determines a congestion control algorithm that matches an algorithm matching feature of each type of traffic in the at least two types of traffic.

In still another possible implementation, that the intelligent network interface card determines a congestion control algorithm that matches an algorithm matching feature of each type of traffic in the at least two types of traffic includes: The intelligent network interface card determines a first congestion control algorithm when the algorithm matching feature of the traffic in the at least two types of traffic meets a first matching condition; and the intelligent network interface card determines a second congestion control algorithm when the algorithm matching feature of the traffic in the at least two types of traffic meets a second matching condition. In this implementation, when the algorithm matching features meet different matching conditions, different congestion control algorithms are matched. This fully utilizes a network bandwidth while improving comprehensive service performance.

In still another possible implementation, that the intelligent network interface card determines a congestion control algorithm that matches an algorithm matching feature of each type of traffic in the at least two types of traffic includes: The intelligent network interface card determines a first congestion control algorithm parameter when the algorithm matching feature of the traffic in the at least two types of traffic meets a third matching condition; and the intelligent network interface card determines a second congestion control algorithm parameter when the algorithm matching feature of the traffic in the at least two types of traffic meets a fourth matching condition. In this implementation, when the algorithm matching features meet different matching conditions, different congestion control algorithm parameters are matched, to match different congestion control algorithms. This fully utilizes a network bandwidth while improving comprehensive service performance.

In still another possible implementation, when the intelligent network interface card determines to perform congestion control on any one type of traffic in the at least two types of traffic, that the intelligent network interface card determines a congestion control algorithm that matches an algorithm matching feature of the any one type of traffic includes: The intelligent network interface card determines to perform congestion control on one type of traffic in the at least two types of traffic, and skips using a congestion control algorithm for another type of traffic in the at least two types of traffic; and the intelligent network interface card determines a congestion control algorithm that matches an algorithm matching feature of the one type of traffic.

According to a second aspect, a network congestion control apparatus is provided. The network congestion control apparatus includes an intelligent network interface card. The intelligent network interface card is configured to obtain at least two types of to-be-transmitted traffic. The intelligent network interface card is configured to identify algorithm matching features of the at least two types of traffic. The intelligent network interface card is further configured to: when determining to perform congestion control on any one type of traffic in the at least two types of traffic, determine a congestion control algorithm that matches an algorithm matching feature of the any one type of traffic. The intelligent network interface card is further configured to perform congestion control on the any one type of traffic according to the congestion control algorithm that matches the algorithm matching feature of the any one type of traffic.

In a possible implementation, the intelligent network interface card is configured to perform at least one of the following operations: identifying the algorithm matching feature of the traffic based on a field used to identify a feature of the traffic, where the field includes at least one of the following: a traffic class, quality of service, a type of service, and a differentiated services code point DSCP; or identifying the algorithm matching feature of the traffic based on a feature of the traffic, where the feature of the traffic includes at least one of the following: a data amount in the traffic, start time of the traffic, deadline time of the traffic, address information of a peer end of the traffic, and a customized traffic feature.

In still another possible implementation, the network congestion control apparatus further includes a configuration tool. The configuration tool is configured to send configuration information to the intelligent network interface card, where the configuration information includes a matching relationship between the algorithm matching features of the at least two types of traffic and at least two congestion control algorithms. The intelligent network interface card is further configured to store the matching relationship between the algorithm matching features of the at least two types of traffic and the at least two congestion control algorithms.

In still another possible implementation, the intelligent network interface card is further configured to determine to perform congestion control on the at least two types of traffic. The intelligent network interface card is further configured to determine a congestion control algorithm that matches an algorithm matching feature of each type of traffic in the at least two types of traffic.

In still another possible implementation, the intelligent network interface card is configured to: determine a first congestion control algorithm when the algorithm matching feature of the traffic in the at least two types of traffic meets a first matching condition; and determine a second congestion control algorithm when the algorithm matching feature of the traffic in the at least two types of traffic meets a second matching condition.

In still another possible implementation, the intelligent network interface card is configured to: determine a first congestion control algorithm parameter when the algorithm matching feature of the traffic in the at least two types of traffic meets a third matching condition; and determine a second congestion control algorithm parameter when the algorithm matching feature of the traffic in the at least two types of traffic meets a fourth matching condition.

In still another possible implementation, the intelligent network interface card is further configured to: determine to perform congestion control on one type of traffic in the at least two types of traffic, and skip using a congestion control algorithm for another type of traffic in the at least two types of traffic; and determine a congestion control algorithm that matches an algorithm matching feature of the one type of traffic.

According to a third aspect, a computer-readable storage medium is provided. The computer-readable storage medium stores instructions, and when the instructions are run on a computer, the computer is enabled to perform the method according to any one of the first aspect or the implementations of the first aspect.

According to a fourth aspect, a computer program product including instructions is provided. When the computer program product runs on a computer, the computer is enabled to perform the method according to any one of the first aspect or the implementations of the first aspect.

According to a fifth aspect, a chip is provided. The chip is coupled to a memory to perform the method according to any one of the first aspect or the implementations of the first aspect of embodiments of this application.

It should be noted that "coupling" in embodiments of this application indicates a direct combination or an indirect combination of two components.

### BRIEF DESCRIPTION OF DRAWINGS

FIG. 1 is a schematic diagram of protocol comparison between TCP and RDMA/RoCE;
FIG. 2 is a schematic diagram of different forms of an RDMA protocol;
FIG. 3 is a schematic diagram of a basic principle of a DCQCN algorithm;
FIG. 4 is a schematic diagram of an architecture of a data center network;
FIG. 5 is a schematic diagram of a structure of a network congestion control apparatus according to an embodiment of this application;
FIG. 6 is a schematic diagram of a detailed structure of an intelligent network interface card 101 shown in FIG. 5;
FIG. 7 is a schematic diagram of a structure of another network congestion control apparatus according to an embodiment of this application;
FIG. 8 is a schematic flowchart of a network congestion control method according to an embodiment of this application;
FIG. 9 is a schematic diagram of effect of implementing a network congestion control method according to an embodiment of this application;
FIG. 10 is a schematic flowchart of still another network congestion control method according to an embodiment of this application; and
FIG. 11 is a schematic flowchart of still another network congestion control method according to an embodiment of this application.

### DESCRIPTION OF EMBODIMENTS

The following describes embodiments of this application with reference to the accompanying drawings in embodiments of this application.

First, a DCQCN algorithm is introduced. A CC algorithm in this application may be a DCQCN algorithm, or may be another algorithm.

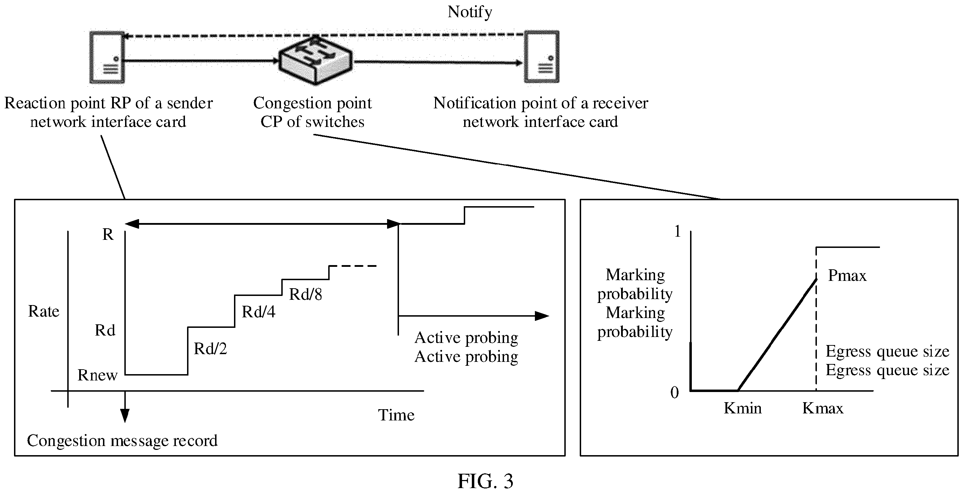

FIG. 3 is a schematic diagram of a basic principle of the DCQCN algorithm. Network element devices used in the DCQCN algorithm include a sender network interface card (also referred to as a reaction point (reaction point, RP) herein), a switch (which refers to a congestion point (congestion point, CP) herein), a receiver network interface card (also referred to as a notification point (notification point, NP) herein). A basic working process of the DCQCN algorithm is as follows:
1: The RP sends a data packet to the NP at a default rate.
2: If the packet is congested at the CP, queue stacking occurs. In this case, the CP adds an explicit congestion notification (explicit congestion notification, ECN) marker to a packet header based on a queue stacking status, to indicate that the packet is "congested".
3: After the NP receives the data packet, the NP checks the ECN marker. If the ECN marker marks "congested", the NP generates a congestion notification packet (congestion notification packet, CNP) according to a rule and sends the CNP to the RP.
4: After the RP receives the CNP, the RP reduces a sending rate according to a preset rule.
5: After the sending rate is reduced, the RP adjusts a sending rate based on a subsequent CNP. If the RP receives the subsequent CNP within a period of time, the RP continues to reduce the rate according to an algorithm agreement. Otherwise, the RP increases the sending rate according to the algorithm agreement.

The DCQCN algorithm meets general requirements of fairness, stability, and robustness. However, because DCQCN is based on a network feedback mechanism, a response rate is not fast. In addition, the DCQCN is used to perform tentative rate adjustment by using an addition-increase/multiplication-decrease (additive-increase/multiplicative-decrease, AIMD) mechanism. Consequently, a rate is converged slowly. Therefore, it is not difficult to find that in some application scenarios, the DCQCN may have problems such as untimely rate reduction, a slowly converged rate, severe network queue stacking, and under-throughput caused by excessive rate reduction.

Although the DCQCN may have problems in some scenarios, RoCE congestion control needs to be implemented by using network interface card hardware, and the DCQCN is a hardware-implemented algorithm with stable overall performance, most commercial RoCEv2 network interface cards still have only built-in DCQCNs (or variants thereof) as unique RoCE congestion control mechanisms. Therefore, another algorithm cannot be switched to avoid a performance defect of the DCQCN when necessary.

This application provides a network congestion control solution, and the network congestion control solution is a congestion control solution based on hardware matching. When an intelligent network interface card obtains to-be-transmitted traffic, the intelligent network interface card may identify an algorithm matching feature of the traffic, and match a congestion control algorithm based on the algorithm matching feature of the traffic. Different algorithm matching features may match different congestion control algorithms. In this way, a hardware-based network congestion control algorithm may be flexibly used.

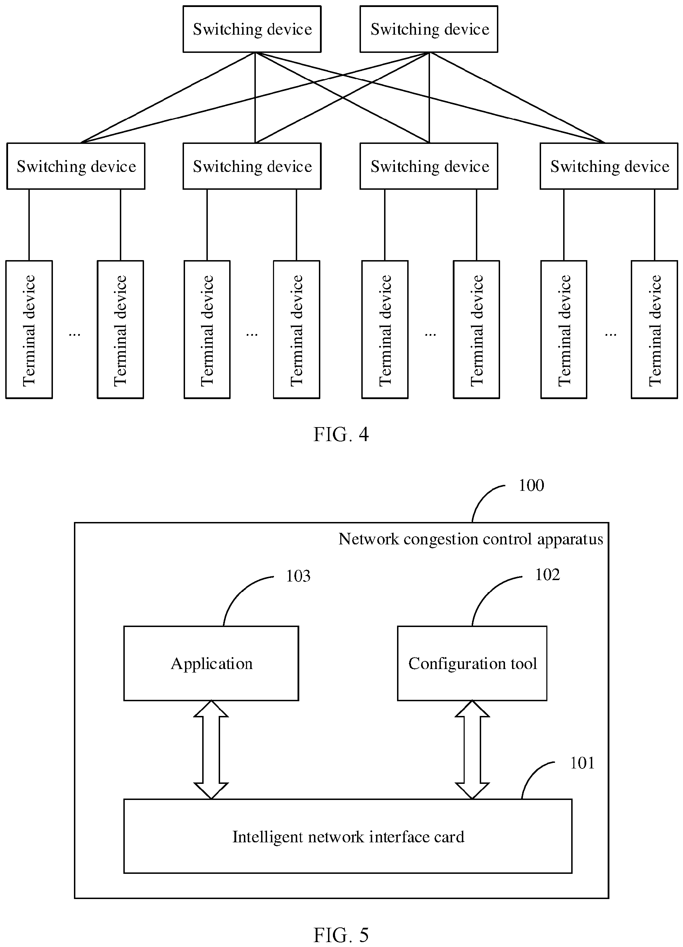

The solution in this application may be applied to a network congestion control apparatus. Specifically, the solution may be applied to a terminal device and a switching device in any switching network (such as a data center network) such as a local area network or a wide area network. The terminal device herein may be a server in the data center network. FIG. 4 is a schematic diagram of an architecture of the data center network. A terminal device in the figure may use different CC algorithms for different data traffic by using the solution in this application, to optimize overall network performance and further meet an actual requirement of a user or an application.

FIG. 5 is a schematic diagram of a structure of a network congestion control apparatus 100 according to an embodiment of this application. The network congestion control apparatus 100 includes an intelligent network interface card 101, and may further include a configuration tool 102 and an application 103 installed on the network congestion control apparatus 100.

The intelligent network interface card 101 is configured to obtain at least two types of to-be-transmitted traffic. The intelligent network interface card 101 is further configured to identify algorithm matching features of the at least two types of traffic. The intelligent network interface card 101 is further configured to: when determining to perform congestion control on any one type of traffic in the at least two types of traffic, determine a congestion control algorithm that matches an algorithm matching feature of the any one type of traffic. The intelligent network interface card 101 is further configured to perform congestion control on the any one type of traffic according to the congestion control algorithm that matches the algorithm matching feature of the any one type of traffic.

In a possible implementation, the intelligent network interface card 101 is configured to perform at least one of the following operations: identifying the algorithm matching feature of the traffic based on a field used to identify a feature of the traffic, where the field includes at least one of the following: a traffic class, quality of service, a type of service, and a differentiated services code point DSCP; or identifying the algorithm matching feature of the traffic based on a feature of the traffic, where the feature of the traffic includes at least one of the following: a data amount in the traffic, start time of the traffic, deadline time of the traffic, address information of a peer end of the traffic, and a customized traffic feature.

In another possible implementation, the configuration tool 102 is configured to send configuration information to the intelligent network interface card 101, where the configuration information includes a matching relationship between the algorithm matching features of the at least two types of traffic and at least two congestion control algorithms. The intelligent network interface card 101 is further configured to store the matching relationship between the algorithm matching features of the at least two types of traffic and the at least two congestion control algorithms.

In another possible implementation, the intelligent network interface card 101 is further configured to determine to perform congestion control on the at least two types of traffic. The intelligent network interface card 101 is further configured to determine a congestion control algorithm that matches an algorithm matching feature of each type of traffic in the at least two types of traffic.

In another possible implementation, the intelligent network interface card 101 is configured to: determine a first congestion control algorithm when the algorithm matching feature of the traffic in the at least two types of traffic meets a first matching condition; and determine a second congestion control algorithm when the algorithm matching feature of the traffic in the at least two types of traffic meets a second matching condition.

In another possible implementation, the intelligent network interface card 101 is configured to: determine a first congestion control algorithm parameter when the algorithm matching feature of the traffic in the at least two types of traffic meets a third matching condition; and determine a second congestion control algorithm parameter when the algorithm matching feature of the traffic in the at least two types of traffic meets a fourth matching condition.

In another possible implementation, the intelligent network interface card 101 is further configured to: determine to perform congestion control on one type of traffic in the at least two types of traffic, and skip using a congestion control algorithm for another type of traffic in the at least two types of traffic; and determine a congestion control algorithm that matches an algorithm matching feature of the one type of traffic.

The intelligent network interface card 101 may be formed by an independent component, or may be an integrated chip.

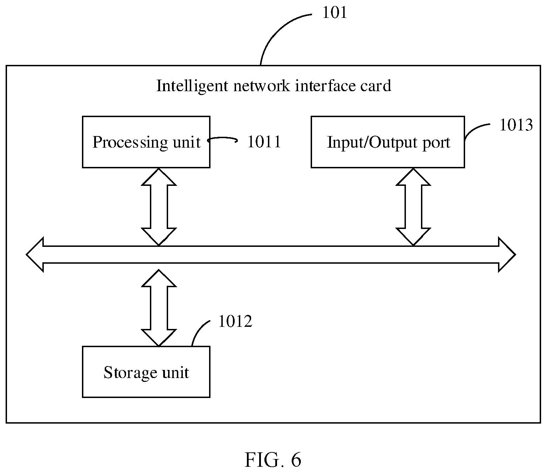

FIG. 6 is a schematic diagram of a detailed structure of the intelligent network interface card 101. The intelligent network interface card 101 includes a processing unit 1011, a storage unit 1012, and an input/output port 1013. The processing unit 1011 may be a CPU, a graphics processing unit (graphics processing unit, GPU), a digital signal processor (digital signal processor, DSP), a field programmable gate array (field programmable gate array, FPGA), a complex programmable logic device (complex programming logic device, CPLD), an application-specific integrated circuit (application-specific integrated circuit, ASIC), or the like. The processing unit 1011 is configured to execute a congestion control algorithm. The storage unit 1012 may include a volatile memory (volatile memory), for example, a random access memory (random access memory, RAM). Alternatively, the storage unit 102 may include a non-volatile memory (non-volatile memory), for example, a flash memory (flash memory), a hard disk drive (hard disk drive, HDD), or a solid-state drive (solid-state drive, SSD). Alternatively, the storage unit 102 may include a combination of the foregoing types of memories, and is configured to: store different CC algorithms, and store information such as parameters and variables that need to be recorded in an algorithm execution process. The input/output port 1013 is configured to receive/send data traffic. An input port and an output port may be integrated together in the input/output port 1013, or the input port and the output port may be independently disposed in the input/output port 1013.

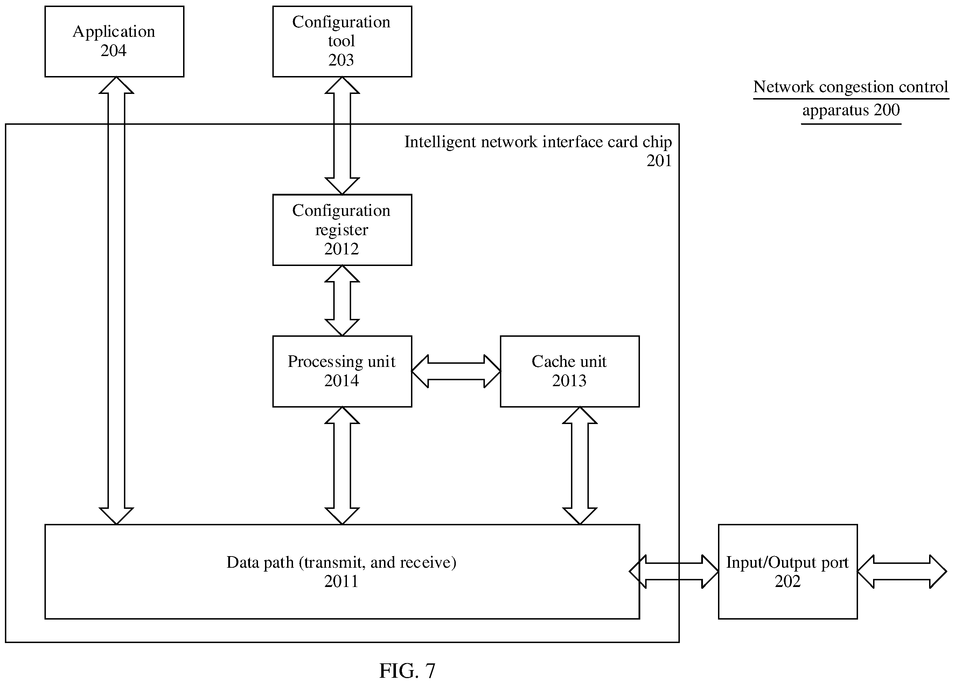

FIG. 7 is a schematic diagram of a structure of still another network congestion control apparatus 200 according to an embodiment of this application. The schematic diagram of the structure shows main modules in an intelligent network interface card, peripheral modules related to the intelligent network interface card, modules in the intelligent network interface card, and connections or interaction relationships between the intelligent network interface card and the peripheral modules. The network congestion control apparatus 200 includes the intelligent network interface card (where the intelligent network interface card includes an intelligent network interface card chip 201 and an input/output port 202) and a configuration tool 203. One or more applications 204 are further installed on the network congestion control apparatus 200. The intelligent network interface card chip 201 is configured to receive/send network data, and further includes a data path 2011 connected to the input/output port 202. The application invokes the intelligent network interface card chip 201 to send/receive data. Specifically, the application uses a specific interface function to invoke the data path 2011 to send/ receive data. The network congestion control apparatus 200 further includes a configuration register 2012 connected to the configuration tool 203. The configuration tool 203 is a tool configured to read and write the configuration register 2012 and may be in a form of a configuration file, a configuration command, or the like. The configuration register 2012 (or may be another type of memory device) is configured to: receive a configuration file or a configuration command of the configuration tool 203; and store a configuration option of a user for the network interface card chip, for example, a matching relationship between algorithm matching features of at least two types of traffic and at least two congestion control algorithms. The network congestion control apparatus 200 further includes a processing unit 2014 connected to the configuration register 2012, the data path 2011, and a cache unit 2013. The processing unit 2014 is configured to: control a processing process of the data path, for example, execute a congestion control algorithm. Before the processing unit 2014 executes the CC algorithm, the processing unit 2014 reads, from the cache unit 2013, a required runtime variable value. After the processing unit 2014 executes the CC algorithm, the processing unit 2014 temporarily stores, in the cache unit 2013, an execution result that needs to be stored. The network congestion control apparatus 200 further includes the cache unit 2013. The cache unit 2013 is configured to store the runtime variable value required by the processing unit 2014, for example, store an execution result of a congestion control algorithm and feedback information carried in input data. The data path 2011 is connected to the input/output port 202, and performs data sending and receiving. The execution result of the congestion control algorithm may be directly read by using the cache unit 2013, or data required by the congestion control algorithm may be extracted from received data, and temporarily stored in the cache unit 2013. The input/output port 202 is a hardware module configured to connect to a network through a channel, and the network is not limited to a wired or wireless network.

The following describes a network congestion control method provided in this application with reference to structures shown in FIG. 4 to FIG. 7.

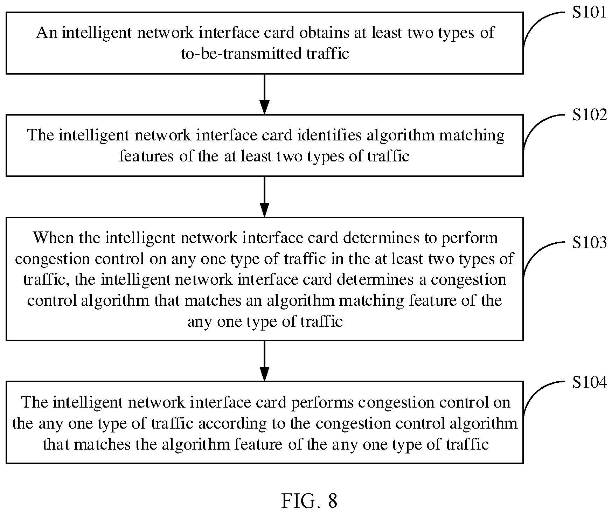

FIG. 8 is a schematic flowchart of the network congestion control method according to an embodiment of this application. The method is applied to the foregoing network congestion control apparatus. For example, the method may include the following steps.

S101: An intelligent network interface card obtains at least two types of to-be-transmitted traffic.

An application invokes an input/output port to send and receive traffic, and the input/output port exchanges the at least two types of to-be-transmitted traffic with the intelligent network interface card. Specifically, the input/output port sends received traffic to the intelligent network interface card, and the intelligent network interface card decapsulates the received traffic. Alternatively, the intelligent network interface card encapsulates to-be-sent traffic generated by the application and sends the encapsulated traffic to the input/output port for sending.

The input/output port may exchange more than one type of traffic with the intelligent network interface card at the same time, and may exchange more than two types of traffic at the same time. If a resource requirement of the at least two types of traffic transmitted by the apparatus exceeds an available part of resources of the apparatus, network congestion may occur.

S102: The intelligent network interface card identifies algorithm matching features of the at least two types of traffic.

Each type of traffic has a corresponding algorithm matching feature. The algorithm matching feature is a feature used for congestion control algorithm matching. The algorithm matching feature may be a feature applied to traffic, for example, a dedicated field used to identify a feature of the traffic. Alternatively, the algorithm matching feature may be a feature of the traffic.

The intelligent network interface card may identify the algorithm matching features of the foregoing at least two types of traffic.

S103: When the intelligent network interface card determines to perform congestion control on any one type of traffic in the at least two types of traffic, the intelligent network interface card determines a congestion control algorithm that matches an algorithm matching feature of the any one type of traffic.

In this embodiment, different traffic may have different algorithm matching features, and for different algorithm matching features, different congestion control algorithms are matched. This improves comprehensive service performance while fully utilizing a network bandwidth. In addition, instead of using a fixed CC algorithm for each type of traffic, link bandwidths are fairly allocated for different traffic.

In an implementation, the intelligent network interface card may determine to perform congestion control on the at least two types of traffic, and the intelligent network interface card determines a congestion control algorithm that matches an algorithm matching feature of each type of traffic in the at least two types of traffic. In other words, congestion control is performed for each of the at least two types of traffic. Specifically, when the algorithm matching feature of the any one type of traffic in the at least two types of traffic meets a first matching condition, the intelligent network interface card determines to use a first CC algorithm. When the algorithm matching feature of the any one type of traffic in the at least two types of traffic meets a second matching condition, the intelligent network interface card determines to use a second CC algorithm.

For example, the algorithm matching feature is a traffic class (traffic class). The first matching condition is: The traffic class ≤ 3, and a corresponding first CC algorithm is CC_A. The second matching condition is: The traffic class > 3, and a corresponding second CC algorithm is CC_B. CC_A tends to quickly respond to network feedback and reduce backlog. CC_B tends to send traffic as soon as possible to preempt a link bandwidth. The application may proactively distinguish transmission performance requirements of different traffic, and determine a value of a field indicating a traffic class of traffic. For example, a traffic class of traffic 1 that needs to quickly respond to network feedback and reduce backlog is denoted as 2, and a traffic class of traffic 2 that needs to be sent as soon as possible to preempt a link bandwidth is denoted as 4. When the intelligent network interface card obtains the traffic, the intelligent network interface card identifies a value of a traffic class of the traffic, matches the traffic 1 with a CC_A algorithm, and matches the traffic 2 with a CC_B algorithm. It can be learned that the application performs differentiated transmission control by explicitly invoking different CC algorithms. This lifts a limitation caused when a single CC algorithm is used to process all traffic, and helps further meet an actual requirement of the application.

Traffic is classified into two types based on a traffic class field (or other fields). When congestion occurs on a network, the CC_A algorithm quickly responds to a congestion signal fed back by the network, reduces a sending rate of traffic with a large data amount and a low priority (for example, background traffic such as data backup) to proactively relieve congestion. The CC_B algorithm maintains a stable sending rate to ensure that traffic with a small data amount and a high priority traffic (for example, delay-sensitive traffic such as control signaling and an interactive operation) is sent as soon as possible. In this way, a network bandwidth is fully utilized, and comprehensive service performance is improved.

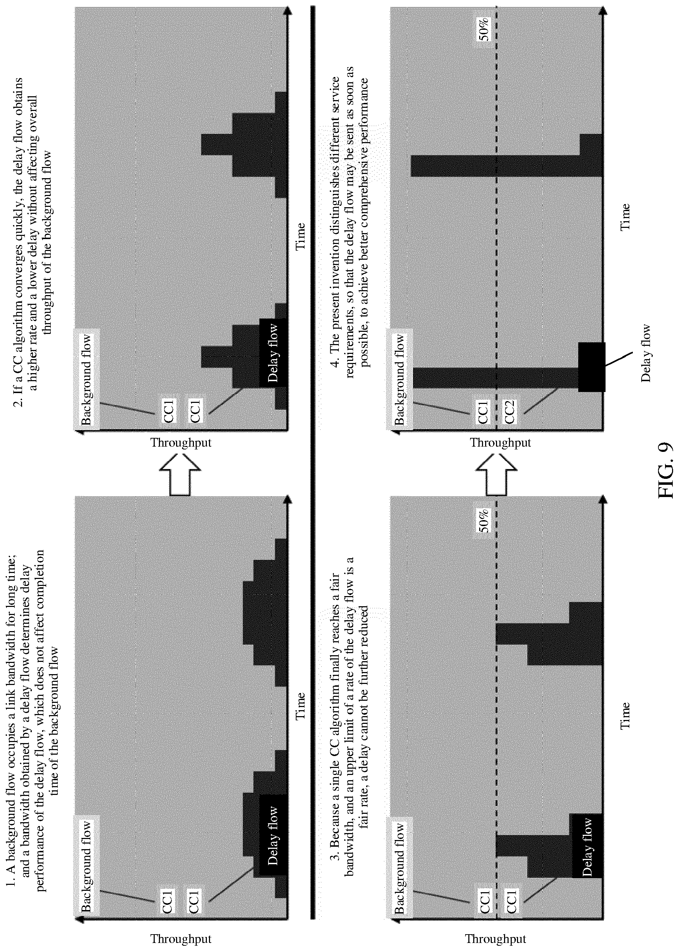

FIG. 9 is a schematic diagram of effect of implementing a method according to this embodiment. For example, there are two types of traffic in a database service network: a background (background) flow with a large data amount, for example, a database backup operation, and a delay flow with a small data amount, for example, a database query (query) operation.

In a first schematic diagram of effect in an upper left corner shown in FIG. 9, when the two types of traffic contend for a network resource at the same time, the background flow occupies a link bandwidth for long time, and a bandwidth allocated to the delay flow determines completion time of the delay flow. In addition, the bandwidth allocated to the delay flow is reflected as delay performance.

In a second schematic diagram of effect in an upper right corner shown in FIG. 9, a data amount of the delay flow is small, and time that the delay flow occupies a network is inversely proportional to a bandwidth occupied by the delay flow. Therefore, if a CC algorithm converges quickly, the delay flow obtains a larger bandwidth, the completion time of the delay flow may be shortened. However, when an overall amount of data that needs to be sent remains unchanged, completion time of the background flow also remains unchanged. In other words, a delay of the delay flow is shortened, and performance of the background flow is not affected.

In a third schematic diagram of effect in a lower left corner shown in FIG. 9, a single CC algorithm usually enables various types of traffic to finally achieve fair bandwidth allocation. Therefore, a bandwidth upper limit actually obtained by the delay flow may be expected to be close to a fair bandwidth. This hinders the delay flow from further increasing a rate and shortening the delay.

In a fourth schematic diagram of effect in a lower right corner as shown in FIG. 9, processing mechanisms of different CC algorithms are different, and different types of traffic may be processed in a same network. According to the method in the present invention, the delay flow may be sent as soon as possible, and more optimized comprehensive performance is obtained.

In another implementation, the intelligent network interface card may determine to perform congestion control on one type of traffic in the at least two types of traffic, and skip using a congestion control algorithm for another type of traffic in the at least two types of traffic; and the intelligent network interface card determines a congestion control algorithm that matches an algorithm matching feature of the one type of traffic. The congestion control algorithm that matches the algorithm matching feature of the one type of traffic may be the foregoing DCQCN algorithm, and is certainly not limited to the DCQCN algorithm. The CC algorithm is not enabled for the another type of traffic, to be specific, the another type of traffic is sent as much as possible, and feedback signals such as network congestion are not responded. For example, for traffic with a high priority and a small data amount, for example, important control signaling with a small data amount, the method in this embodiment may be used to match a proper CC algorithm based on an identified algorithm matching feature, to avoid a delay in sending the important data caused by other data.

S104: The intelligent network interface card performs congestion control on the any one type of traffic according to the congestion control algorithm that matches the algorithm matching feature of the any one type of traffic.

The intelligent network interface card supports using a plurality of CC algorithms at the same time, and caches and records runtime variables for different CC algorithms.

According to the network congestion control method provided in this embodiment of this application, when the intelligent network interface card obtains the to-be-transmitted traffic, the intelligent network interface card may identify the algorithm matching feature of the traffic, and match congestion control algorithm based on the algorithm matching feature of the traffic. Different algorithm matching features may match different congestion control algorithms. Therefore, a hardware-based network congestion control algorithm may be flexibly used.

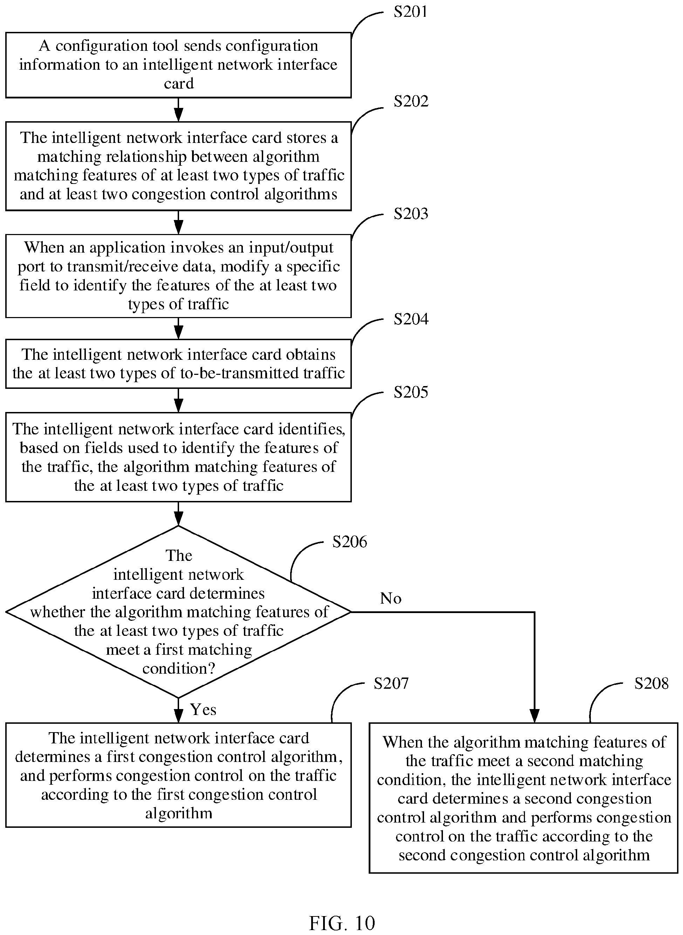

FIG. 10 is a schematic flowchart of still another network congestion control method according to an embodiment of this application. For example, the method may include the following steps.

S201: A configuration tool sends configuration information to an intelligent network interface card, where the configuration information includes a matching relationship between algorithm matching features of at least two types of traffic and at least two congestion control algorithms.

In this embodiment, a user is allowed to set, by using the configuration tool, enabling conditions of different CC algorithms, that is, CC algorithms that match different algorithm matching features, in a configuration register of the intelligent network interface card. The configuration information may be sent to the configuration register in a form of a configuration command or a configuration file.

S202: The intelligent network interface card stores the matching relationship between the algorithm matching features of the at least two types of traffic and the at least two congestion control algorithms.

After the configuration register receives the configuration information sent by the configuration tool, the configuration register of the intelligent network interface card stores the configuration information. In other words, the configuration register stores the matching relationship (or referred to as a correspondence or an association relationship) between the algorithm matching features of the at least two types of traffic and the at least two congestion control algorithms.

S203: When an application invokes an input/output port to perform data sending and receiving, the application modifies a specific field to identify features of the at least two types of traffic.

The application may proactively distinguish transmission performance requirements of different traffic and modify the specific field. For example, the application may re-assign values to the specific field (the specific field may be initially empty or a default value) in the traffic. The specific field is a field used to identify a feature of traffic, and the field includes a traffic class (traffic class), quality of service (quality of service), a type of service (type of service/class of service), a differentiated services code point (differentiated services code point, DSCP), a VLAN priority, and OpCode.

For example, the algorithm matching feature is the traffic class, and a traffic class field is initially empty. If the application invokes the input/output port to receive traffic 1, and the traffic 1 needs to respond quickly to network feedback and reduce traffic stacking, a value 2 is assigned to a traffic class field of the traffic 1. If the application invokes the input/output port to send traffic 2, and the traffic 2 needs to be sent as soon as possible to preempt a link bandwidth, a value of 4 is assigned to a traffic class field of the traffic 2.

S204: The input/output port exchanges the at least two types of to-be-transmitted traffic with the intelligent network interface card.

For specific implementation of this step, refer to step S101 in the embodiment shown in FIG. 8.

S205: The intelligent network interface card identifies the algorithm matching features of the at least two types of traffic based on fields used to identify the features of the at least two types of traffic.

When the intelligent network interface card obtains the traffic, the intelligent network interface card may identify a value of a traffic class of the traffic. For example, a value of a traffic class for identifying the foregoing traffic 1 is 2, and a value of a traffic class for identifying the foregoing traffic 2 is 4.

S206: The intelligent network interface card determines whether an algorithm matching feature of each type of traffic in the at least two types of traffic meets a first matching condition; if the algorithm matching feature of each type of traffic in the at least two types of traffic meets the first matching condition, the intelligent network interface card performs step S207; otherwise, if the algorithm matching feature of each type of traffic in the at least two types of traffic meets the second matching condition, the intelligent network interface card performs step S208.

For example, the algorithm matching feature is the traffic class, the first matching condition is: The traffic class ≤ 3, and a corresponding first CC algorithm is CC_A. The second matching condition is: The traffic class > 3, and a corresponding second CC algorithm is CC_B. CC_A tends to quickly respond to network feedback and reduce backlog. CC_B tends to send traffic as soon as possible to preempt a link bandwidth.

S207: If the algorithm matching feature of the traffic meets the first matching condition, the intelligent network interface card determines a first congestion control algorithm, and performs congestion control on the traffic according to the first congestion control algorithm.

S208: If the algorithm matching feature of the traffic meets the second matching condition, the intelligent network interface card determines a second congestion control algorithm, and performs congestion control on the traffic according to the second congestion control algorithm.

The intelligent network interface card identifies a value of the traffic class, matches the traffic 1 with a CC_A algorithm, and matches the traffic 2 with a CC_B algorithm. It can be learned that the application performs differentiated transmission control by explicitly invoking different CC algorithms. This lifts a limitation caused when a single CC algorithm is used to process all traffic, and helps further meet an actual requirement of the application.

In addition, the matching condition may also be an ambiguous and adaptive rule description. With development of technologies such as machine learning, the matching condition of the CC algorithm may be an optimization objective in some form, for example, controlling an overall network delay to be within T time, and controlling a maximum queue length in a network to be within L.

Traffic is classified into two types based on a traffic class field (or other fields). When congestion occurs on a network, the CC_A algorithm quickly responds to a congestion signal fed back by the network, reduces a sending rate of traffic with a large data amount and a low priority (for example, background traffic such as data backup) to proactively relieve congestion. The CC_B algorithm maintains a stable sending rate to ensure that traffic with a small data amount and a high priority traffic (for example, delay-sensitive traffic such as control signaling and an interactive operation) is sent as soon as possible. In this way, a network bandwidth is fully utilized, and comprehensive service performance is improved.

Alternatively, in another embodiment, step S206 may be replaced with step A: The intelligent network interface card determines whether an algorithm matching feature of each type of traffic in the at least two types of traffic meets a third matching condition; if the algorithm matching feature of each type of traffic in the at least two types of traffic meets the third matching condition, the intelligent network interface card performs step B; otherwise, if the algorithm matching feature of each type of traffic in the at least two types of traffic meets a fourth matching condition, the intelligent network interface card performs step C. Step S207 may be replaced with step B: When the algorithm matching feature of the traffic in the at least two types of traffic meets the third matching condition, the intelligent network interface card determines a first congestion control algorithm parameter. Step S208 may be replaced with step C: When the algorithm matching feature of the traffic in the at least two types of traffic meets the fourth matching condition, the intelligent network interface card determines a second congestion control algorithm parameter. A CC algorithm parameter may include one or more of the following: an adjustment amplitude and a time interval for adjusting a sending rate, an initial value and a coefficient in an algorithm calculation process, a frequency of sending a signaling packet, and the like.

The intelligent network interface card identifies a value of the traffic class and matches an algorithm parameter 1 for the traffic 1, matches an algorithm parameter 2 for the traffic 2. The algorithm parameter 1 and the algorithm parameter 2 may be different parameters of a same CC algorithm, or may be different parameters of different CC algorithms. It can be learned that the application performs differentiated transmission control by explicitly invoking different CC algorithm parameters. This lifts a limitation caused when a single CC algorithm parameter is used to process all traffic, and helps further meet an actual requirement of the application.

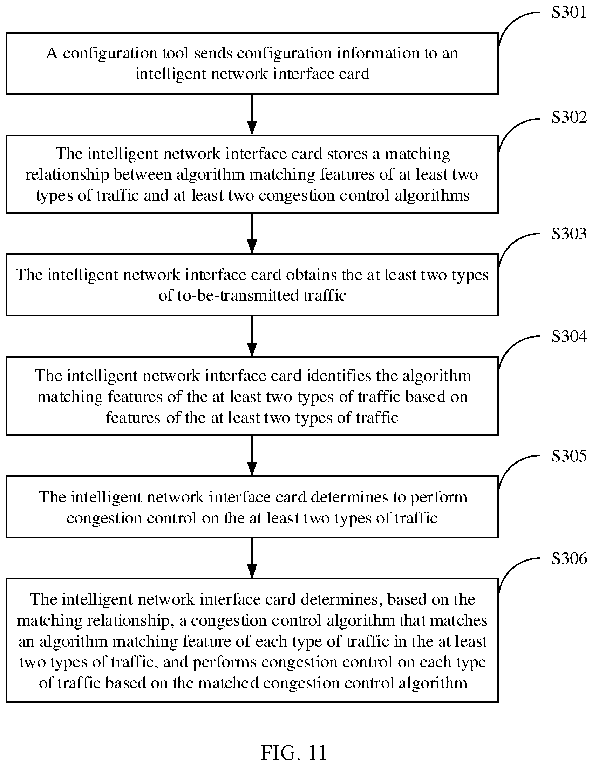

FIG. 11 is a schematic flowchart of still another network congestion control method according to an embodiment of this application. For example, the method may include the following steps.

S301: A configuration tool sends configuration information to an intelligent network interface card, where the configuration information includes a matching relationship between algorithm matching features of at least two types of traffic and at least two congestion control algorithms.

For specific implementation of this step, refer to step S201 in the embodiment shown in FIG. 10.

S302: The intelligent network interface card stores the matching relationship between the algorithm matching features of the at least two types of traffic and the at least two congestion control algorithms.

For specific implementation of this step, refer to step S202 in the embodiment shown in FIG. 10.

S303: The intelligent network interface card obtains the at least two types of to-be-transmitted traffic.

For specific implementation of this step, refer to step S101 in the embodiment shown in FIG. 8 or step S203 in the embodiment shown in FIG. 10.

S304: The intelligent network interface card identifies the traffic algorithm matching features based on features of the at least two types of traffic.

Traffic has some measurable features, including a data amount (message size) and a time stamp (time stamp) that are of the traffic (including start time and deadline time that are of the traffic (deadline time)), address information of a peer end (such as IPv4 and IPv6 addresses) of the traffic, and a customized traffic feature. These features may be used as the algorithm matching feature of the traffic.

For example, in some scenarios, traffic with a small data amount may be preferentially sent, and traffic with earlier deadline time may be preferentially sent. Different addresses reflect different path lengths (hops), and different CC algorithms may be used. Therefore, the CC algorithms may be distinguished by using the matching condition in this embodiment.

After the intelligent network interface card obtains the at least two types of traffic, the intelligent network interface card may identify at least one algorithm matching feature of the traffic by using an existing identification technology.

S305: The intelligent network interface card determines to perform congestion control on the at least two types of traffic.

Both of the at least two types of traffic are traffic with a high priority, and the intelligent network interface card determines to perform congestion control on the at least two types of traffic.

S306: The intelligent network interface card determines, based on the matching relationship, a congestion control algorithm that matches the algorithm matching feature of each type of traffic in the at least two types of traffic, and performs congestion control on each type of traffic based on the matched congestion control algorithm.

The intelligent network interface card searches a configuration register for an identified algorithm matching feature of each type of traffic based on the identified algorithm matching feature of each type of traffic, and performs congestion control on each type of traffic based on the matched congestion control algorithm.

It can be learned that, in this embodiment, the intelligent network interface card may identify the algorithm matching feature of the traffic based on the feature of the traffic, determine, based on the matching relationship preconfigured by the configuration tool, the congestion control algorithm that matches the algorithm matching feature of the traffic, and determine to perform congestion control on each type of traffic based on the matched congestion control algorithm. Therefore, a hardware-based network congestion control algorithm may be flexibly used.

It should be understood that unless otherwise specified, "/" in descriptions of this application indicates an "or" relationship between associated objects. For example, A/B may indicate Aor B, where A and B may be singular or plural. In addition, in the descriptions of this application, "a plurality of means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design described as an "example" or "for example" in embodiments of this application should not be explained as being more preferred or having more advantages than another embodiment or design. Exactly, use of the word such as "example" or "for example" is intended to present a relative concept in a specific manner for ease of understanding.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

All or some of the foregoing embodiments may be implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center that integrates one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state disk (solid-state disk, SSD).

## Claims

1. A network congestion control method, applied to a network congestion control apparatus, wherein the network congestion control apparatus comprises an intelligent network interface card, and the method comprises:
obtaining, by the intelligent network interface card, at least two types of to-be-transmitted traffic;
identifying, by the intelligent network interface card, algorithm matching features of the at least two types of traffic;
when the intelligent network interface card determines to perform congestion control on any one type of traffic in the at least two types of traffic, determining, by the intelligent network interface card, a congestion control algorithm that matches an algorithm matching feature of the any one type of traffic; and
performing, by the intelligent network interface card, congestion control on the any one type of traffic according to the congestion control algorithm that matches the algorithm matching feature of the any one type of traffic.

2. The method according to claim 1, wherein the identifying, by the intelligent network interface card, algorithm matching features of the at least two types of traffic comprises at least one of the following operations:
identifying, by the intelligent network interface card, the algorithm matching feature of the traffic based on a field used to identify a feature of the traffic, wherein the field comprises at least one of the following: a traffic class, quality of service, a type of service, and a differentiated services code point DSCP; or
identifying, by the intelligent network interface card, the algorithm matching feature of the traffic based on a feature of the traffic, wherein the feature of the traffic comprises at least one of the following: a data amount in the traffic, start time of the traffic, deadline time of the traffic, address information of a peer end of the traffic, and a customized traffic feature.

3. The method according to claim 1 or 2, wherein the network congestion control apparatus further comprises a configuration tool, and the method further comprises:
sending, by the configuration tool, configuration information to the intelligent network interface card, wherein the configuration information comprises a matching relationship between the algorithm matching features of the at least two types of traffic and at least two congestion control algorithms; and
storing, by the intelligent network interface card, the matching relationship between the algorithm matching features of the at least two types of traffic and the at least two congestion control algorithms.

4. The method according to any one of claims 1 to 3, wherein when the intelligent network interface card determines to perform congestion control on any one type of traffic in the at least two types of traffic, the determining, by the intelligent network interface card, a congestion control algorithm that matches an algorithm matching feature of the any one type of traffic comprises:
determining, by the intelligent network interface card, to perform congestion control on the at least two types of traffic; and
determining, by the intelligent network interface card, a congestion control algorithm that matches an algorithm matching feature of each type of traffic in the at least two types of traffic.

5. The method according to claim 4, wherein the determining, by the intelligent network interface card, a congestion control algorithm that matches an algorithm matching feature of each type of traffic in the at least two types of traffic comprises:
determining, by the intelligent network interface card, a first congestion control algorithm when the algorithm matching feature of the traffic in the at least two types of traffic meets a first matching condition; and
determining, by the intelligent network interface card, a second congestion control algorithm when the algorithm matching feature of the traffic in the at least two types of traffic meets a second matching condition.

6. The method according to claim 4 or 5, wherein the determining, by the intelligent network interface card, a congestion control algorithm that matches an algorithm matching feature of each type of traffic in the at least two types of traffic comprises:
determining, by the intelligent network interface card, a first congestion control algorithm parameter when the algorithm matching feature of the traffic in the at least two types of traffic meets a third matching condition; and
determining, by the intelligent network interface card, a second congestion control algorithm parameter when the algorithm matching feature of the traffic in the at least two types of traffic meets a fourth matching condition.

7. The method according to any one of claims 1 to 3, wherein when the intelligent network interface card determines to perform congestion control on any one type of traffic in the at least two types of traffic, the determining, by the intelligent network interface card, a congestion control algorithm that matches an algorithm matching feature of the any one type of traffic comprises:
determining, by the intelligent network interface card, to perform congestion control on one type of traffic in the at least two types of traffic, and skipping using a congestion control algorithm for another type of traffic in the at least two types of traffic; and
determining, by the intelligent network interface card, a congestion control algorithm that matches an algorithm matching feature of the one type of traffic.

8. A network congestion control apparatus, wherein the network congestion control apparatus comprises an intelligent network interface card;
the intelligent network interface card is configured to obtain at least two types of to be-transmitted traffic;
the intelligent network interface card is configured to identify algorithm matching features of the at least two types of traffic;
the intelligent network interface card is further configured to: when determining to perform congestion control on any one type of traffic in the at least two types of traffic, determine a congestion control algorithm that matches an algorithm matching feature of the any one type of traffic; and
the intelligent network interface card is further configured to perform congestion control on the any one type of traffic according to the congestion control algorithm that matches the algorithm matching feature of the any one type of traffic.

9. The apparatus according to claim 8, wherein the intelligent network interface card is configured to perform at least one of the following operations:
identifying the algorithm matching feature of the traffic based on a field used to identify a feature of the traffic, wherein the field comprises at least one of the following: a traffic class, quality of service, a type of service, and a differentiated services code point DSCP; or
identifying the algorithm matching feature of the traffic based on a feature of the traffic, wherein the feature of the traffic comprises at least one of the following: a data amount in the traffic, start time of the traffic, deadline time of the traffic, address information of a peer end of the traffic, and a customized traffic feature.

10. The apparatus according to claim 8 or 9, wherein the network congestion control apparatus further comprises a configuration tool;
the configuration tool is configured to send configuration information to the intelligent network interface card, wherein the configuration information comprises a matching relationship between the algorithm matching features of the at least two types of traffic and at least two congestion control algorithms; and
the intelligent network interface card is further configured to store the matching relationship between the algorithm matching features of the at least two types of traffic and the at least two congestion control algorithms.

11. The apparatus according to any one of claims 8 to 10, wherein
the intelligent network interface card is further configured to determine to perform congestion control on the at least two types of traffic; and
the intelligent network interface card is further configured to determine a congestion control algorithm that matches an algorithm matching feature of each type of traffic in the at least two types of traffic.

12. The apparatus according to claim 11, wherein the intelligent network interface card is configured to:
determine a first congestion control algorithm when the algorithm matching feature of the traffic in the at least two types of traffic meets a first matching condition; and
determine a second congestion control algorithm when the algorithm matching feature of the traffic in the at least two types of traffic meets a second matching condition.

13. The apparatus according to claim 11 or 12, wherein the intelligent network interface card is configured to:
determine a first congestion control algorithm parameter when the algorithm matching feature of the traffic in the at least two types of traffic meets a third matching condition; and
determine a second congestion control algorithm parameter when the algorithm matching feature of the traffic in the at least two types of traffic meets a fourth matching condition.

14. The apparatus according to any one of claims 8 to 10, wherein the intelligent network interface card is further configured to:
determine to perform congestion control on one type of traffic in the at least two types of traffic, and skip using a congestion control algorithm for another type of traffic in the at least two types of traffic; and
determine a congestion control algorithm that matches an algorithm matching feature of the one type of traffic.

15. A network congestion control apparatus, comprising a memory, a processor, and a computer program that is stored in the memory and that can be run on the processor, wherein when executing the computer program, the processor implements the method according to any one of claims 1 to 7.

16. A computer-readable storage medium, wherein the computer readable storage medium stores a computer program, and when the computer program is executed by a processor, the method according to any one of claims 1 to 7 is implemented.

17. A computer program product, configured to: when executed on a computing device, implement the method according to any one of claims 1 to 7.
